# EUROPEAN PATENT SPECIFICATION

(11) **EP 1 206 994 B1**
(45) Date of publication and mention of the grant of the patent: **28.04.2004**
(21) Application number: 01301550.8
(22) Date of filing: 21.02.2001
(51) Int. Cl.: B23K 20/12

(54) **Friction stir welding method**
Drehendes Reibungschweissverfahren
Procédé de soudage par friction à mouvement cyclique

(30) Priority: 17.11.2000 JP 2000350411
(43) Date of publication of application: 22.05.2002
(73) Proprietor: Hitachi, Ltd., Chiyoda-ku, Tokyo 101-8010 (JP)
(72) Inventor: Ezumi, Masakuni, c/o Hitachi, Ltd., Chiyoda-ku, Tokyo 100-8220 (JP); Fukuyori, Kazushige, c/o Hitachi Kasado Kikai Co., Kudamatsu-shi, Yamaguchi 744-0002 (JP)
(74) Representative: Paget, Hugh Charles Edward

(56) References cited:
- EP-A- 0 992 314
- US-A- 5 893 507
- PATENT ABSTRACTS OF JAPAN vol. 1998, no. 14, 31 December 1998 (1998-12-31) & JP 10 249553 A (SHOWA ALUM CORP), 22 September 1998 (1998-09-22)
- PATENT ABSTRACTS OF JAPAN vol. 1999, no. 09, 30 July 1999 (1999-07-30) & JP 11 101286 A (SHOWA ALUM CORP), 13 April 1999 (1999-04-13)
- PATENT ABSTRACTS OF JAPAN vol. 1998, no. 12, 31 October 1998 (1998-10-31) & JP 10 193143 A (SHOWA ALUM CORP), 28 July 1998 (1998-07-28)

## Description

The present invention relates to a friction stir welding method according to the preamble of claim 1 (see, for example, EP-A-0 992 314), particularly used in the production of a railway car body.

### DESCRIPTION OF THE RELATED ART

A friction stir welding method is a technique using a round shaft (here called a rotary tool) being inserted into the welding region of members and moving the rotating rotary tool along the junction line, thereby heating, mobilizing and plasticising the welding region, and realizing a solid-phase welding of the members. The rotary tool is comprised of a large diameter portion and a small diameter portion. The small diameter portion is inserted into the member to be welded, and the end surface of the large diameter portion is in contact with the aforementioned member. A screw may be formed on the small diameter portion.

Moreover, the friction stir welding is performed by providing a convex or upstanding portion on the two members to be welded on the side for the rotary tool to be inserted, and inserting the small diameter portion of the rotary tool into the butted region, as well as inserting the large diameter portion of the rotary tool into the convex portions. The gap between the two members is filled using the metal of the convex portion as the source. The convex portion may be formed only on one of the members. This is used in a case for friction stir welding members made of extruded materials, at a region where the extruded directions are orthogonalized.

This technique is disclosed in JP-A-11-90655 (US 6,050,474).

### SUMMARY OF THE INVENTION

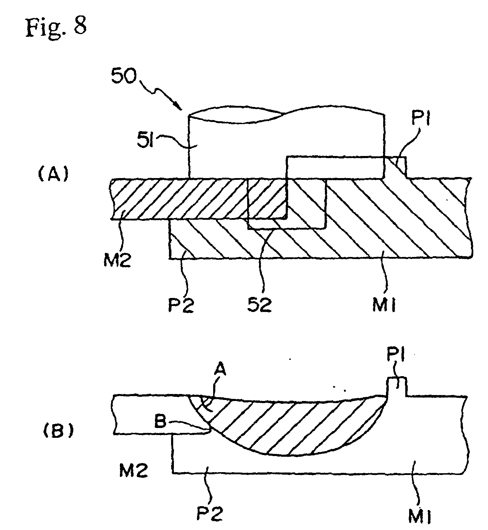

FIG. 8 is a longitudinal cross-sectional view of a friction stir welded region at the butted region between a member M1 provided with a convex portion P1 and a member M2 not provided with a convex portion. FIG. 8(A) shows the condition where a rotary tool 50 is inserted into the butted region between the two members M1, M2. FIG. 8(B) is a longitudinal cross-sectional view after welding, and the hatching indicates the stirred area. The indication of the stirred area is an exemplification. The rotary tool 50 for friction stir welding is comprised of a large diameter portion 51 and a small diameter portion 52 at the leading end thereof. When performing friction stir welding, the small diameter portion 52 is inserted into the butted region, and a part of the large diameter portion 51 is inserted into the convex portion P1. The leading end of the small diameter portion 52 is inserted into a projecting segment P2 overlapping the rear surface of the member M2. The lower end of the large diameter portion 51 is positioned so as to come into contact with the upper surface of the member M2. When welding is performed, continuous metal oxide A is formed near the surface of the welded region on the side of the member M2 having no convex portion, as is indicated in FIG. 8(B). It is considered that this metal oxide A is a metal oxide at the surface of the member being embedded but not diffused. Also, the surface overlapped with the projecting segment P2 and the member M2 tends to form a notch B arising towards the upper surface side (large diameter portion T1 side of the rotary tool T). It is considered that the continuous metal oxide A or the notch B deteriorates strength.

The object of the present invention is to provide a friction stir welding method that can reduce or minimise occurrence of defects, applicable for example in production of a railway car body.

As a result of various examinations, it is considered that the pressure of metal fluidised by the rotation of the rotary tool is not uniform throughout the projected area in the axis direction of the rotary tool, but is different depending on the position. It is considered that the position with high pressure is defined by the direction of rotation and the direction of movement of the rotary tool. It is considered that this leads to occurrence of continuous metal oxide A or notch B.

The present invention is characterized in placing a member with no convex portion in the position where high pressure is provided, because the position with higher pressure of the fluidised metal is defined by the direction of rotation and direction of movement of the rotary tool.

### BRIEF DESCRIPTION OF THE DRAWINGS

FIG. 1 is a longitudinal cross-sectional view of the rim material and the hollow-shaped material of an embodiment of the present invention during welding;
FIG. 2 is a plane view of FIG. 1;
FIG. 3 is a longitudinal cross-sectional view after welding in FIG. 1;
FIG. 4 is a front view of a side structure according to one embodiment of the present invention;
FIG. 5 is a cross-sectional view taken along line V-V in FIG. 4;
FIG. 6 is a perspective view of a car body of a railway car;
FIG. 7 is a longitudinal cross-sectional view of the welded region in another embodiment of the present invention; and
FIG. 8 is a longitudinal cross-sectional view of a conventional welded region.

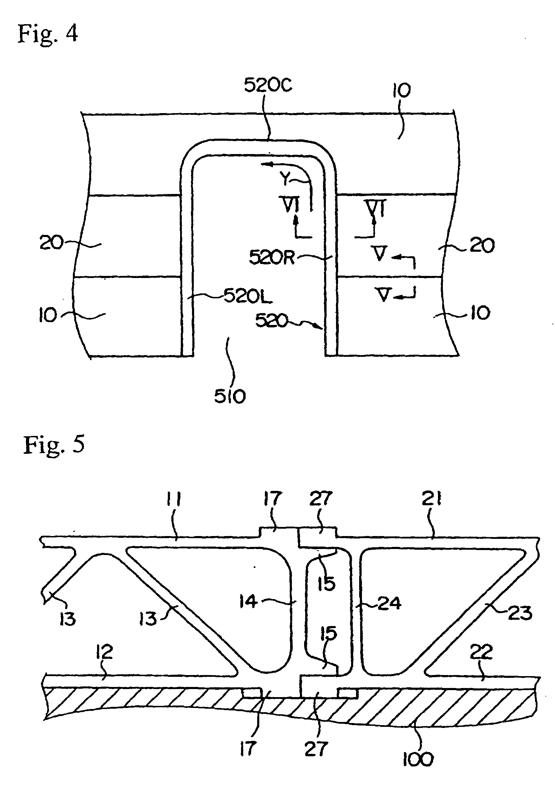

Figures 5 and 8 are not disclosing an embodiment of the present invention and are only for illustrative purposes.

### DETAILED DESCRIPTION OF PREFERRED EMBODIMENTS

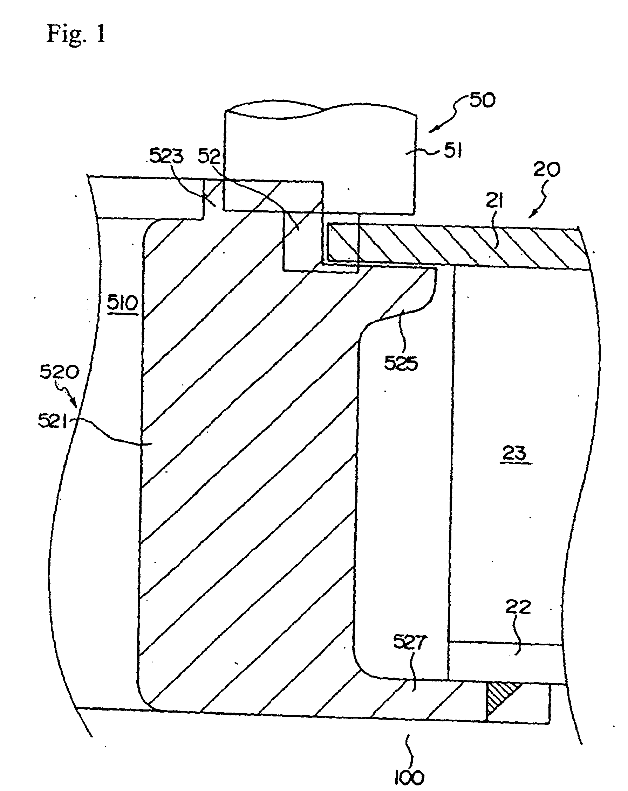

A preferred embodiment of the present invention will now be explained with reference to FIG. 1 through FIG. 4 and 6. A car body 500 of a railway car is comprised of a side structure 501 constituting the side surface, a roof structure 502 constituting the roof, an underframe 503 constituting the floor, and an end structure 504 constituting the end portion in the longitudinal direction. The side structure 501, the roof structure 502, and the underframe 503 are respectively formed by welding plural extruded members 10, 20. The longitudinal direction (extruded direction) of the extruded members 10, 20 is positioned toward the longitudinal direction of the car body 500. The extruded members 10, 20 are hollow members made of aluminum alloy.

The side structure 501 is provided with a plurality of windows 530, and is also provided with an entrance 510 for passengers. A rim member 520 is welded to the rim of the opening of the entrance 510. The rim member 520 is a thick member having high strength, and is extruded of aluminum alloy, and is bent in a U-shape along the left and right sides and the upper side of the entrance 510.

The extrusion direction of the extruded members 10, 20 constituting the side structure 501 is in the longitudinal direction of the car body, that is, the side structure 501. Because the rim member 520 is also extruded, the extrusion direction of the rim member 520 and the extruded direction of the members 10, 20 are orthogonal at the region of the left and right sides of the entrance 510.

The hollow member 10 (20) is comprised of two substantially parallel face plates 11 (21), 12 (22), and a plurality of connecting plates 13 (23), 14 (24) connecting the two face plates.

A connecting plate 14 (24) at the end portion in the width direction of the hollow member 10 (20) is orthogonal to the face plates 11, 12 (21, 22). At the outer surface side of the connecting portion between the connecting plate 14 and the face plate 11 (12), there is provided a concave or rebate portion for the face plate 21 (22) of the hollow member 20 to overlap. The end portions of the hollow member 10 overlap the respective face plates 21, 22 of the hollow member 20. There are provided projecting segments 15 for supporting the face plates 21, 22 to the end portions of the face plates 11, 12. The projecting segment 15 projects from the connecting plate 14. The projecting segment 15 is connected to the concave portion mentioned above.

At the end portions of the face plates 11, 12 (21, 22), there is provided a convex portion or rib 17 (27) projecting towards the outer surface side (outside in the thickness direction) of the hollow members 10, 20. The end surfaces of the face plates 11, 21 and the convex portion 17 (that is, the concave portion at the face plates 11, 12 side) is located at approximately the centre of thickness of the connecting plate 14. The end surfaces of the face plate 11 (12) and the convex portion 17 of the hollow member 10 is abutted against the end surfaces of the face plate 21 (22) and the convex portion 27 of the hollow member 20.

The face plate 11 (12) and the face plate 21 (22) lie in the same plane, and the size of the projection of the convex portions 17, 27 are equal. The width of the two convex portions 17, 27 are equal. The width of,the two convex portions is larger than the diameter of the large-diameter portion 51 of the rotary tool 50. The metal of the convex portions 17, 27 becomes the source of metal for filling the gap in the butted region.

As is shown in FIG. 5, the case of welding members 10, 20 will be explained. Before welding, the two hollow members 10, 20 are placed on a pedestal 100, and are fixed thereto. The rotary tool 50 is provided with a small diameter portion 52 at the leading end of a large diameter portion 51. The small diameter portion 52 is provided with a screw. For welding, the rotary tool 50 is inserted into the butted region. The lower end of the large diameter portion 51 is placed inside the convex portions 17, 27. The small diameter portion 52 is inserted into the butted region between the face plates 11, 21. The lower end of the small diameter portion 52 is inserted slightly into the projecting segment 15. The rotating rotary tool 50 is moved along the welding line of the butted region. The convex portions 17, 27 become the source for filling the gap in the butted region.

When the friction stir welding on the upper surface side as is illustrated in FIG. 5 is completed, the hollow members 10, 20 are turned upside down, and are subjected to friction stir welding likewise or their other side.

When all of the hollow members 10, 20 constituting the side structure 501 are welded together, the structure is placed with the inner side of the car upward, and unnecessary portions surrounding the openings such as the window 530 or the entrance 510 are removed by cutting. The end portion of the face plate 21 (11) at the outer side of the car is more projected towards the opening than the end portions of the face plate 22 (12) at the inner side of the car or the connecting plates 23 (24, 13, 14). Next, the side structure 501 processed as is mentioned above is placed on the rim member 520 bent in a U-shape.

Next, the rim member 520 of the entrance 510 is friction stir welded to the hollow members 10, 20. In FIG. 1, the rim member 520 bent in a U-shape is placed at the opening for the entrance 510. The rim member 520 is comprised of a segment 521 for closing the end portions of the hollow members 10, 20, a convex portion or rib 523 projecting more outwardly than the outer surface of the face plate 21 (11) at the outer side of the car, a projecting segment 525 overlapping the inner surface of the face plate 21 (11), and the projecting segment 527 overlapping the outer surface of the face plate 22 (12) at the inner side of the car. The end surface at the outer side of the car of the segment 521, excluding the convex portion 523, lies in substantially the same plane as the outer surface of the face plate 21 (11). The projecting segment 525 at the outer side of the car is recessed from the outer side of the car. The end portion of the face plate 21 (11) is abutted against the rim material 520.

The butted region is friction stir welded from above, with rim member 520 fixed to the pedestal 100. The end portions of the face plates 21, 11 abutted against the rim member 520 are the end portions in the extrusion direction, so that there exist no convex portions on the face plates adjacent the member 520. The hollow member 10 coming into contact with the central segment 520C of the U-shaped rim member 520 is cut in its width direction, so that similarly no convex portion exists thereon adjacent the member 520.

As mentioned, the butted region between the face plate 21 (11) and the rim member 520 is friction stir welded from above. The small diameter portion 52 of the rotary tool 50 is inserted into the butted region as shown in FIG. 1. The leading end of the small diameter portion 52 is inserted into the projecting segment 525. A part of the large-diameter portion 51 is inserted into the convex portion 523. The large diameter portion 51 is inserted so as to form a slight gap between the lower end of the large diameter portion 51 and the upper surface of the face plate 21 (11). The rotary tool 50 is inserted so as to incline the large diameter portion 51 rearwardly relative to the direction of movement of the tool along the welding line; therefore there should be a gap between the lower most end of the large diameter portion 51 and the upper surface of the face plate 21 (11).

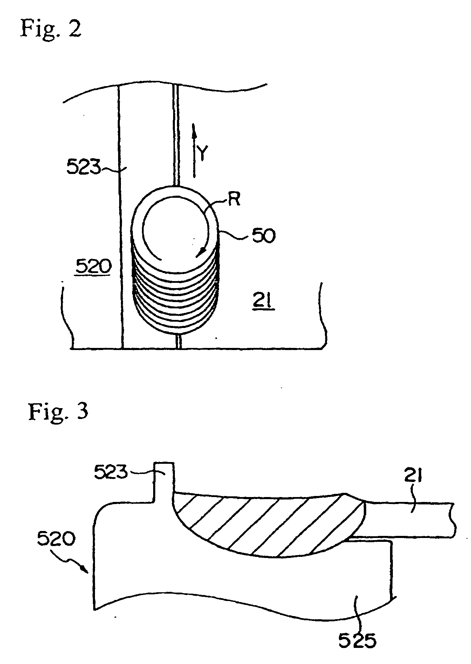

After inserting the rotary tool 50 into the region to be welded as is mentioned above, the rotary tool 50 is rotated and moved along the welding line. The rotary tool is moved in FIG. 1 from the near side of the paper towards the far side of the paper. In FIG. 2, which is a plan view of FIG. 1, Y represents the direction of movement of the rotary tool 50, and R represents the direction of rotation of the rotary tool 50. The screw of the small diameter portion 52 is a left-hand screw. When looking at the small diameter portion 52 of the rotary tool 50 from the large diameter portion 51, the direction of rotation of the rotary tool 50 is rightwards (clockwise). As is illustrated in FIG. 1, there exists the convex portion 523 to the left-hand side of the axial centre of the rotary tool 50, and the projecting segment 525 to the right-hand side thereof, when looking forward from the rotary tool 50 in the direction of movement. The centre of rotation of the rotary tool 50 is inclined. The axial centre of the large diameter portion 51 is positioned rearwardly relative to the axial centre of the small diameter portion 52, in the direction of movement.

In FIG. 4, the rotary tool 50 is first inserted into the butted region at the lower end of the right segment 520R of the U-shaped rim material 520, and starts movement therefrom. The rotary tool 50 moves from the right segment 520R towards the centre segment 520C, and moves from the centre segment 520C to the left segment 520L. Lastly, the rotary tool arrives at the lower end of the left segment 520L, and completes welding.

In friction stir welding, metal of the convex portion 523 is moved to the upper surface side of the face plate 21 (11), and also becomes the source for filling the gap in the butted region between the face plate 21 (11) and the rim member 520.

After completion of the friction stir welding, any material remaining at the welded region or of the convex portion 523 above the outer surface of the face plate 21 (11) is removed with a grinder. After completing the friction stir welding, or before completion, the projecting segment 527 and the face plate 22 (12) are fillet welded, as seen in FIG. 1.

With this method, the continuous metal oxide A formed in prior processes at the vicinity of the upper surface of the welded region is decreased or eliminated, as is shown in FIG. 3. Also, the notch B formed at the overlapping surface between the projecting segment 525 and the face plate 21 (12) is diminished or eliminated. The hatching in FIG. 3 indicates the stirred region, by way of illustrative example.

It is considered that the pressure of metal at the welded region fluidised by the rotary tool 50 is larger at the right-hand side of the axial centre of the rotary tool than the left-hand side, in the direction of movement of the rotary tool. It is considered that this results from the non-welded metal at the front of the rotary tool 50 being shifted to the right-hand side, because the rotary tool 50 is rotated rightwards. It is considered that this is the reason of reducing or eliminating the continuous metal oxide A, even though there exists a welding region with the face plate 21 (11) to the right-hand side of the rotary tool. Moreover, it is considered that this is the reason for the notch B being diminished or eliminated at the overlapping surface, even though there exists an overlapping surface to the right-hand side of the rotary tool.

On the other hand, the pressure at the left-hand side of the rotary tool 50 is lower than at the right-hand side. It is considered that this is because there exists no non-welded metal at the rear side of the rotary tool 50, so that no new metal is supplied to the left-hand side. Therefore, the continuous metal oxide A is reduced or eliminated at the left-hand side. Also, there exists no overlapping surface to the left-hand side.

In the case where the screw of the small diameter portion 52 is a right-hand screw, the direction of rotation becomes leftwards (counter-clockwise). The high-pressure region in this case is formed to the left-hand side of the axial centre, when looking at the direction of movement from the rotary tool 50. Therefore, it is positioned so that the overlapping surface exists on the left-hand side, and the convex portion 527 exists on the right-hand side. That is, the rotary tool 50 is moved from the left segment 520L of the rim material 520 to the right segment 520R via the centre segment 520C.

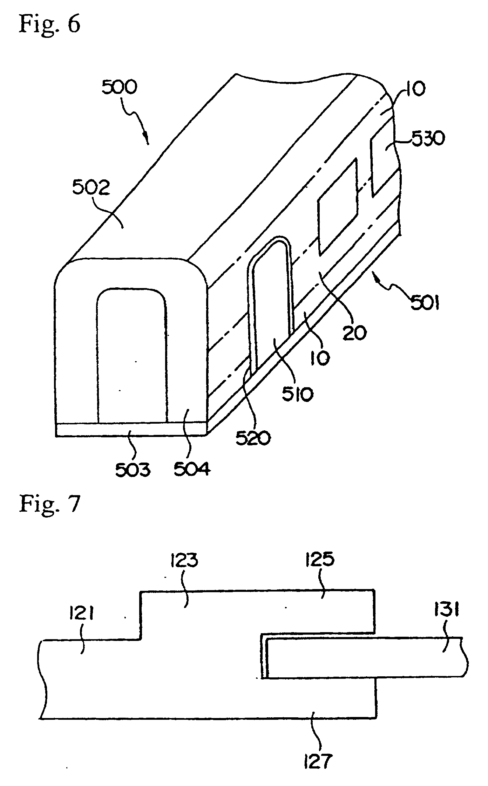

The embodiment illustrated in FIG. 7 will now be explained. A convex portion or rib 123 projects at the surface side of an end portion of a plate 121. A projecting segment 125 projects in parallel to the plate 121 from the leading end of the convex portion 123. A projecting segment 127 projects parallel to the projecting segment 125 from the rear (inner) surface of the plate 121. A plate 131 is inserted between the two projecting segments 125, 127, and is abutted against the plate 121. The end portion of the face plate 121 is abutted against the end portion of the face plate 111. The lower end of the large diameter portion 51 of the rotary tool 50 is placed inside the convex portion 123 and the projecting segment 125.

In the embodiment of FIG. 7, the projecting segments 125, 127 may be eliminated. When the projecting segment 127 is eliminated, it only could restrain occurrence of continuous metal oxide.

The present invention therefore enables friction stir welding with inhibition of occurrence of defects.

## Claims

1. A friction stir welding method, comprising the steps of:
butting an end portion of a first member (520; 121) against an end portion of a plate (21; 131) which is a portion of a second member (20), with an upstanding portion (523; 123) of said first member (520, 121) projecting above a first surface of said plate (21, 131), said upstanding portion (523, 123) projecting in the thickness direction of said first member (520, 121) from a first surface of said butted end portion of said first member (520, 121); and
performing friction stir welding using a rotary tool (50) including a small diameter portion (52) at the leading end of a large diameter portion (51) , by inserting said small diameter portion (52) into the butted region; wherein
a part of said large diameter portion (51) is inserted into said upstanding portion (523; 123);
said rotary tool (50) is moved relatively along said butted region;
as seen in cross-section across said butted region, the rotary axis of said tool (50) is orthogonal to said surfaces of said first member (520, 121) and said plate (21); and
after the friction stir welding material of said upstanding portion (523; 123) remaining above said first surface of said plate (21; 131) is removed;
**characterized in that**:
said end portion of said plate (21; 131) has no upstanding portion projecting from said first surface thereof; and
during the friction stir welding, the rotation direction of the rotary tool (50) and the relative positions of the first member (520, 121) and second plate (21) are in accordance with one of the following two mutually inverse arrangements:-
(i) the rotary tool (50) is rotated rightwards when looking from said large diameter portion (51); and
when looking in the direction of movement of the tool (50) along the butted region, said plate (21) is positioned rightwards of the axial centre of said rotary tool (50), and said upstanding portion is positioned leftwards of the axial centre of said rotary tool (50);
(ii) said rotary tool (50) is rotated leftwards when looking from said large diameter portion (51); and
when looking in the direction of movement of the tool (50) along the butted region, said plate (21) is positioned leftwards of the axial centre of said rotary tool (50), and said upstanding portion is positioned rightwards of the axial centre of said rotary tool (50).

2. A method according to claim 1, wherein;
said end portion of said first member (521, 121) includes a projecting segment (525) projecting towards said plate (21) and having a surface substantially in parallel to said plate (21);
said projecting segment (525) overlaps the rear surface of said end portion of said plate (21), when looking from said large diameter portion (51); and
friction stir welding is performed while a part of the leading end of said small diameter portion (52) is inserted into said projecting segment (525).

3. A method according to claim 1 or 2, wherein:
said first member (520, 121) and said second member (20) are extruded members;
the extrusion direction of said plate (21) is substantially orthogonal to the extrusion direction of said first member (520, 121), at the zone of the friction stir welding.

4. A friction stir welding method according to claim 2, employed in producing a railway car, wherein said first member (520, 121) and said second member (20) are extruded members, which form portions of a side structure of the railway car, the first member being a rim of an opening of the car and including said upstanding portion projecting to outer side of the car from one surface of said first member.

5. A method according to claim 4, wherein:
said first extruded member (520, 121) constituting said rim is bent so as to possess at least three sides; and
in the case where said arrangement (i) of claim 1 is employed, said rotary tool (50) is moved sequentially from the right side of said rim to the centre side, and then to the left side, when looking from the outer side of the car; and
in the case where arrangement (ii) of claim 1 is employed, said rotary tool (50) is moved sequentially from the left side of said rim material to the centre side, and then to the right side in order of precedence, when looking from the outer side of the car.

## Patentansprüche

1. Reibrührschweißverfahren, wobei
ein Endabschnitt eines ersten Bauteils (520; 121) zum Anstoß an einem einen Abschnitt eines zweiten Bauteils (20) bildenden Endabschnitt einer Platte (21; 131) gebracht wird, wobei ein nach oben ragender Abschnitt (523; 123) des ersten Bauteils (520, 121) über die Oberfläche der Platte (21, 131) hinausragt, wobei der nach oben ragende Abschnitt (523, 123) in Dickenrichtung des ersten Bauteils (520, 121) von einer ersten Oberfläche des anstoßenden Endabschnitt des ersten Bauteils (520, 121) herausragt,
eine Reibrührschweißung unter Verwendung eines rotierenden Werkzeugs (50) durchgeführt wird, das einen Abschnitt (52) mit kleinem Durchmesser am vorderen Ende eines Abschnitts (51) mit großem Durchmesser aufweist, indem der Abschnitt (52) mit kleinem Durchmesser in den anstoßenden Bereich eingeführt wird, wobei
ein Teil des Abschnitts (51) mit großem Durchmesser in den nach oben ragenden Abschnitt (523; 123) eingeführt wird,
das rotierende Werkzeug (50) längs des anstoßenden Bereichs relativ bewegt wird,
die Drehachse des Werkzeugs (50) zu den Oberflächen des ersten Bauteils (520, 131) und der Platte (21), im Querschnitt durch den anstoßenden Bereich gesehen, senkrecht steht, und
nach dem Reibrührschweißen oberhalb der ersten Oberfläche der Platte (21; 131) verbleibendes Material des nach oben ragenden Abschnitts (523; 123) entfernt wird,
**dadurch gekennzeichnet,**
**daß** der Endabschnitt der Platte (21; 131) keinen von ihrer ersten Oberfläche nach oben ragenden Abschnitt aufweist, und
**daß** während des Reibrührschweißens die Drehrichtung des rotierenden Werkzeugs (50) und die relativen Positionen des ersten Bauteils (520, 121) und der zweiten Platte (21) sich entsprechend einer der folgenden beiden zueinander inversen Anordnungen befinden:
(i) das rotierende Werkzeug (50) wird, von dem Abschnitt (51) mit großem Durchmesser aus gesehen, rechts gedreht und
die Platte (21) befindet sich, in Bewegungsrichtung des Werkzeugs (50) längs des anstoßenden Bereichs gesehen, rechts von der axialen Mitte des rotierenden Werkzeugs (50) und der nach oben ragende Bereich befindet sich links von der axialen Mitte des rotierenden Werkzeugs (50),
(ii) das rotierende Werkzeug wird, von dem Abschnitt (51) mit großem Durchmessern aus gesehen, links gedreht und
die Platte (21) befindet sich, gesehen in der Bewegungsrichtung des Werkzeugs (50) längs des anstoßenden Bereichs, links von der axialen Mitte des rotierenden Werkzeugs (50), und der nach oben ragende Bereich befindet sich rechts von der axialen Mitte des rotierenden Werkzeugs (50).

2. Verfahren nach Anspruch 1, wobei
der Endabschnitt des ersten Bauteils (521, 121) ein in Richtung der Platte (121) vorstehendes Segment (525) mit einer zu der Platte (21) im wesentlichen parallelen Oberfläche aufweist,
das vorstehende Segment (525), von dem Abschnitt (51) mit großem Durchmesser aus gesehen, die hintere Oberfläche des Endabschnitts der Platte (21) überlappt, und
das Reibrührschweißen durchgeführt wird, während ein Teil des vorderen Endes des Abschnitts (52) mit kleinem Durchmesser in das vorstehende Segment (525) eingeführt wird.

3. Verfahren nach Anspruch 1 oder 2,
wobei das erste Bauteil (520, 121) und das zweite Bauteil (20) extrudierte Bauteile sind,
wobei im Bereich der Reibrührschweißung die Extrusionsrichtung der Platte (21) im wesentlichen senkrecht zur Extrusionsrichtung des ersten Bauteils (520, 121) verläuft.

4. Reibrührschweißverfahren nach Anspruch 2, angewendet bei der Herstellung eines Eisenbahnwaggons, wobei das erste Bauteil (520, 121) und das zweite Bauteil (20) extrudierte Bauteile sind, die Abschnitte eines seitlichen Aufbaus des Eisenbahnwaggons darstellen, und wobei das erste Bauteil ein Rand einer Öffnung des Waggons ist und den nach oben ragenden, von einer Oberfläche des ersten Bauteils in Richtung der Außenseite des Waggons vorstehenden Abschnitt aufweist.

5. Verfahren nach Anspruch 4, wobei
das den Rand bildende erste extrudierte Bauteil (520, 121) so gebogen wird, daß es mindestens drei Seiten aufweist, und
bei Anwendung der Anordnung (i) nach Anspruch 1 das rotierende Werkzeug (50), von der Außenseite des Waggons aus gesehen, nacheinander von der rechten Seite des Randes zur mittleren Seite und dann zur linken Seite bewegt wird, während
bei Anwendung der Anordnung (ii) nach Anspruch 1 das rotierende Werkzeug (50), von der Außenseite des Waggons aus gesehen, nacheinander von der linken Seite des Randes im wesentlichen zur mittleren Seite und dann zur rechten Seite in dieser Reihenfolge bewegt wird.

## Revendications

1. Procédé de soudage par mélange-friction, comprenant les étapes consistant à :
placer une extrémité d'un premier élément (520 ; 121) en butée contre une extrémité d'une plaque (21 ; 131) qui est une portion d'un deuxième élément (20), une portion verticale (523 ; 123) dudit premier élément (520 ; 121) faisant saillie au-dessus d'une première surface de ladite plaque (21 ; 131), ladite portion verticale (523 ; 123) faisant saillie dans la direction de l'épaisseur dudit premier élément (520 ; 121) étant une première surface de ladite extrémité en butée dudit premier élément (520 ; 121) ; et
réaliser un soudage par mélange-friction à l'aide d'un outil rotatif (50) comportant une portion de petit diamètre (52) à l'extrémité avant d'une portion de grand diamètre (51), en insérant ladite portion de petit diamètre dans la région en butée ; une partie de ladite portion de grand diamètre (51) étant insérée dans ladite portion verticale (523 ; 123) ;
ledit outil rotatif (50) étant déplacé de manière relative le long de ladite région en butée ;
vu en section transversale d'un côté à l'autre de ladite région en butée, l'axe de rotation dudit outil (50) étant orthogonal auxdites surfaces dudit premier élément (520 ; 121) et de ladite plaque (21) ; et
après le soudage par mélange-friction, la matière de ladite portion verticale (523 ; 123) qui reste au-dessus de ladite première surface de ladite plaque (21 ; 131) étant éliminée ;
**caractérisé en ce que** :
ladite extrémité de ladite plaque (21 ; 131) ne comporte pas de portion verticale faisant saillie depuis ladite première surface de celle-ci ; et
pendant le soudage par mélange-friction, le sens de rotation de l'outil rotatif (50) et les positions relatives du premier élément (520 ; 121) et de la deuxième plaque (21) sont conformes à l'un des deux agencements mutuellement inverses suivants :
(i) l'outil rotatif (50) est amené à tourner vers la droite en regardant depuis ladite portion de grand diamètre (51) ; et
vue dans le sens de mouvement de l'outil (50) le long de la région en butée, ladite plaque (21) est placée à droite du centre axial dudit outil rotatif (50), et ladite portion verticale est placée à gauche du centre axial dudit outil rotatif (50) ;
(ii) ledit outil rotatif (50) est amené à tourner vers la gauche en regardant depuis ladite portion de grand diamètre (51) ; et
vue dans le sens de mouvement de l'outil (50) le long de la région en butée, ladite plaque (21) est placée à gauche du centre axial dudit outil rotatif (50), et ladite portion verticale est placée à droite du centre axial dudit outil rotatif (50).

2. Procédé selon la revendication 1, dans lequel :
ladite extrémité dudit premier élément (521 ; 121) comporte un segment saillant (525) et qui fait saillie vers ladite plaque (21) et a une surface sensiblement parallèle à ladite plaque (21) ;
ledit segment saillant (525) chevauche la surface arrière de ladite extrémité de ladite plaque (21), vu depuis ladite portion de grand diamètre (521) ; et
le soudage par mélange-friction est effectué pendant qu'une partie de l'extrémité avant de ladite portion de petit diamètre (52) est insérée dans ledit segment saillant (525).

3. Procédé selon la revendication 1 ou 2, dans lequel :
ledit premier élément (520 ; 121) et ledit deuxième élément (20) sont des éléments extrudés ;
la direction d'extrusion de ladite plaque (21) est sensiblement orthogonale par rapport à la direction d'extrusion dudit premier élément (520 ; 121) dans la zone du soudage par mélange-friction.

4. Procédé de soudage par mélange-friction selon la revendication 2, servant à fabriquer un wagon de chemin de fer, dans lequel ledit premier élément (520 ; 121) et ledit deuxième élément (20) sont des éléments extrudés qui font partie d'une structure latérale du wagon de chemin de fer, le premier élément étant un bord d'une ouverture du wagon et comportant ladite portion verticale qui fait saillie vers l'extérieur du wagon depuis une surface dudit premier élément.

5. Procédé selon la revendication 4, dans lequel :
ledit premier élément extrudé (520 ; 121) qui constitue ledit bord est cintré de façon à posséder au moins trois côtés ; et
dans le cas où ledit agencement (i) selon la revendication 1 est employé, ledit outil rotatif (50) est déplacé successivement depuis le côté droit dudit bord vers le centre, puis vers le côté gauche, vu de l'extérieur du wagon ; et
dans le cas où l'agencement (ii) selon la revendication 1 est employé, ledit outil rotatif (50) est déplacé successivement depuis le côté gauche dudit bord vers le centre, puis vers le côté droit par ordre de priorité, vu de l'extérieur du wagon.
